# EUROPÄISCHE PATENTSCHRIFT

(11) **EP 4 679 765 B1**
(45) Veröffentlichungstag und Bekanntmachung des Hinweises auf die Patenterteilung: **30.09.2026**
(21) Anmeldenummer: 24188163.0
(22) Anmeldetag: 11.07.2024
(51) Int. Cl.: H04L 9/08, G06N 10/40

(54) **ROUTING QUANTENMECHANISCHER VERSCHRÄNKUNGSBEZIEHUNGEN IN EINEM DAFÜR AUSGEBILDETEN QUANTENNETZWERK**
ROUTING QUANTUM MECHANICAL ENTANGLEMENT RELATIONSHIPS IN A QUANTUM NETWORK CONFIGURED THEREFOR
ROUTAGE DE RELATIONS D'ENCHEVÊTREMENT MÉCANIQUE QUANTIQUE DANS UN RÉSEAU QUANTIQUE CONÇU À CET EFFET

(43) Veröffentlichungstag der Anmeldung: 14.01.2026
(73) Patentinhaber: Deutsche Telekom AG, 53113 Bonn (DE)
(72) Erfinder: GEITZ, Marc, 58089 Hagen (DE); BRAUN, Ralf-Peter, 12305 Berlin (DE)
(74) Vertreter: Maucher Jenkins Patent- und Rechtsanwälte

(56) Entgegenhaltungen:
- EP-A1- 4 187 840
- US-B2- 11 716 151
- GHADERIBANEH MOHAMMAD ET AL: "Efficient Quantum Network Communication Using Optimized Entanglement Swapping Trees", IEEE TRANSACTIONS ON QUANTUM ENGINEERING, IEEE, vol. 3, 19 April 2022 (2022-04-19), pages 1 - 20, XP011908317, DOI: 10.1109/TQE.2022.3168784
- SCHOUTE EDDIE ET AL: "Shortcuts to quantum network routing", 17 October 2016 (2016-10-17), XP055847032, Retrieved from the Internet <URL:https://arxiv.org/pdf/1610.05238.pdf> [retrieved on 20211004]

## Beschreibung

Die Erfindung betrifft eine Lösung für das Routing von quantenmechanischen Verschränkungsbeziehungen in einem Quantennetzwerk, nämlich von Verschränkungsbeziehungen welche aufgrund photonisch vermittelter Verschränkungszustände zwischen Netzwerkknoten eines solchen Quantennetzwerks bestehen. Sprachlich vereinfachend wird nachfolgend und in den Patentansprüchen auch teilweise nur von der Weitergabe von Verschränkungsbeziehungen gesprochen. Ausdrücklich sei betont, dass es sich im Kontext der Beschreibung der vorliegenden Erfindung stets um Verschränkungsbeziehungen handelt, die aufgrund in dem Quantennetzwerk durch Photonen vermittelter Verschränkungszustände bestehen, nämlich um Verschränkungszustände, die zwischen Photonen untereinander oder auch zwischen Photonen und Atomen oder Molekülen bestehen können. Gegenstände der Erfindung sind hierbei ein die Wegfindung für die Weitergabe solcher Verschränkungsbeziehungen zwischen Netzwerkknoten eines Quantennetzwerks einschließendes Verfahren und ein System, nämlich ein zur Durchführung dieses Verfahrens ausgebildetes Quantennetzwerk.

Gegenwärtig ist eine sich beschleunigende Entwicklung bei der Nutzung als solches schon länger bekannter quantenmechanischer Prinzipien in der Informations- und Kommunikationstechnik zu verzeichnen. So wird insbesondere verstärkt an der Entwicklung von Quantencomputern gearbeitet, welche künftig umfangreiche und komplexe Berechnungsvorgänge, wie sie beispielsweise - um hier exemplarisch nur einen möglichen Anwendungsfall herauszugreifen - zur Erstellung von Klimamodellen erforderlich sind, mit einer die Leistungsfähigkeit einzelner klassischer Hochleistungsrechner und zu Netzwerken verbundener Computer um die Größenordnung von mehreren Zehnerpotenzen übertreffenden Performance deutlich zu verkürzen.

Gleichzeitig bringt die voranschreitende Entwicklung von Quantencomputern potenziell auch neue Risiken für die Sicherheit in der Informationstechnik mit sich. So ist beispielsweise davon auszugehen, dass bisher als sicher geltende Verschlüsselungstechniken gegenüber unter dem Einsatz vom Quantencomputern geführten Angriffen künftig nicht mehr sicher sind. Vor dem Hintergrund des letztgenannten Aspekts gewinnt daher die Quantenkryptografie, welche sich ebenfalls quantenmechanischer Prinzipien bedient, sehr stark an Bedeutung.

In dem zuvor angesprochenen Kontext bringen die in der Wirtschaft etablierte, teilweise globale Arbeitsteiligkeit und der Bedarf an einer flächendeckenden Bereitstellung angriffssicherer Verschlüsselungsmechanismen das Erfordernis mit sich, Quantenzustände auch über große Distanzen zu vermitteln oder weiterzugeben. Dies gilt zumal auch Quantencomputer künftig untereinander oder mit anderen, quantenmechanische Effekte nutzenden Einheiten und Systemen, wie beispielsweise Quantensensoren, vernetzt sein werden. Für die Vernetzung von Quantencomputern und anderen quantenmechanische Effekte nutzenden Einrichtungen sowie für die quantensichere Kommunikation und für die Erfüllung des sich daraus ergebenden Erfordernisses des Austausches beziehungsweise der Weitergabe von Quantenzuständen können künftig Quantennetzwerke dienen.

Allerdings können Quantenzustände, zwischen welchen quantenmechanische Verschränkungszustände bestehen, innerhalb von Netzwerken, so auch innerhalb von Quantennetzwerken, aufgrund des No-Cloning-Theorems ohne weitere Maßnahmen nicht einfach von einem ersten Netzwerkknoten zu einem zweiten Netzwerkknoten und von diesem wiederum auf einen oder mehrere weitere Netzwerkknoten übertragen werden. Es gilt demnach hierfür geeignete Lösungen zu entwickeln, welche es erlauben Quantenzustände respektive insbesondere zwischen ihnen bestehende Verschränkungen, also Verschränkungsbeziehungen, weiterzugeben.

Daneben gilt es zu beachten, dass die direkte Weitergabe optischer Quantenzustände respektive optisch, das heißt durch Photonen vermittelter Quantenzustände über einen optischen Quantenkanal und so auch die Weitergabe durch Photonen vermittelter Verschränkungszustände aufgrund der in den für den Quantenkanal verwendeten Glasfasern auftretenden Dämpfung im Hinblick auf die Reichweite klar limitiert ist. Insoweit ist von Reichweiten von 1 bis 5 km respektive von derzeit höchstens 50 bis 80 km, bei der Nutzung eines einer Wellenlänge von etwa 1550 nm entsprechenden Frequenzbandes, auszugehen.

Aufgabe der Erfindung ist daher die Bereitstellung einer Lösung für ein die Wegfindung einschließendes Routing zur Weitergabe von Verschränkungsbeziehungen in einem Quantennetzwerk, nämlich von Verschränkungsbeziehungen, welche zwischen Netzwerkknoten des Quantennetzwerks oder, genauer gesagt, zwischen dort gespeicherten quantenmechanischen Zuständen aufgrund durch Photonen über Quantenkanäle vermittelter Verschränkungszustände bestehen. Diese soll die Weitergabe solcher Verschränkungsbeziehungen auch über große Distanzen in einer effizienten Weise ermöglicht. Hierzu sind ein Verfahren zu beschreiben und ein zur Durchführung dieses Verfahrens ausgebildetes System anzugeben.

Die Aufgabe wird durch ein Verfahren mit den Merkmalen des Patentanspruchs 1 gelöst. Ein die Aufgabe lösendes, zur Durchführung des Verfahrens geeignetes System wird durch den ersten Sachanspruch charakterisiert. Vorteilhafte Aus- und Weiterbildungen der Erfindung sind durch die jeweiligen Unteransprüche gegeben.

Entsprechend den vorstehenden Ausführungen und der Aufgabe handelt es sich bei dem nachfolgend beschriebenen Verfahren um ein Verfahren für das Routing aufgrund photonischer Verschränkungszustände zwischen Netzwerkknoten bestehender Verschränkungsbeziehungen in einem optischen Quantennetzwerk. Es handelt sich hierbei um ein die Wegfindung durch das vorgenannte Quantennetzwerk einschließendes Verfahren zur Weitergabe solcher Verschränkungsbeziehungen zwischen einer Mehrzahl durch optische Quantenkanäle mit je einem zugehörigen klassischen Kanal zu dem Quantennetzwerk verbundener Netzwerkknoten. Ebenso wie die eigentlichen Quantenkanäle sind ihre jeweils zugehörigen klassischen Kanäle vorzugsweise, aber nicht zwingend, als optische Kanäle ausgebildet. Gegebenenfalls können dabei sogar die Quantenkanäle und die zugehörigen klassischen optischen Kanäle jeweils in einer gemeinsamen, einer sogenannten "grauen" Faser bereitgestellt werden.

Im Hinblick darauf, dass Verschränkungsbeziehungen zwischen Netzwerkknoten des Quantennetzwerks aufgrund durch Photonen vermittelter Verschränkungszustände bestehen, welche die in einer solchen Verschränkungsbeziehung zueinander respektive untereinander stehenden Netzwerkknoten teilen, kommt die Weitergabe einer solchen Verschränkungsbeziehung im Grunde der Weitergabe des diese begründenden Verschränkungszustands gleich. Im nachfolgenden Kontext wird daher im Zusammenhang mit der Weitergabe einer Verschränkungsbeziehung teilweise auch von der Weitergabe eines Verschränkungszustands gesprochen, ohne das dem insoweit eine abweichende Bedeutung oder ein anderes Verständnis zugrunde liegt.

Quantenmechanische Verschränkungsbeziehungen bestehen dabei zwischen Netzwerkknoten, welche jeweils dazu ausgebildet sind, sich quantenmechanische, in dem Netzwerk durch Photonen vermittelte Verschränkungszustände mit mindestens einem anderen Netzwerkknoten des Quantennetzwerks zu teilen. Die Aussage, wonach Netzwerkknoten dazu ausgebildet sind, einen Verschränkungszustand miteinander zu teilen, meint hierbei, dass eine bei einem der Netzwerkknoten an einem Photon, Atom oder Molekül eintretende Änderung vermittelt durch den zwischen den Netzwerkknoten bestehenden Verschränkungszustand sich instantan auf den sich insoweit ebenfalls ändernden Quantenzustand des mit ihm verschränkten Photons, Atoms oder Moleküls bei dem anderen Netzwerkknoten auswirkt.

Hierfür werden die genannten Netzwerkknoten unter anderem dazu ausgebildet, solche Verschränkungszustände, welche innerhalb des die Netzwerkknoten miteinander verbindenden Quantennetzwerks durch über dieses Netzwerk übertragene Photonen vermittelt werden, wenigstens temporär in einem von ihnen umfassten Quantenspeicher jeweils in Zuordnung zu einem die Verschränkungszustände eindeutig bezeichnenden Identifikator zu speichern.

Das zur Lösung der Aufgabe vorgeschlagene Verfahren ist so gestaltet, dass die Wegfindung für das Routing zur Weitergabe einer zwischen Netzwerkkoten bestehenden Verschränkungsbeziehung an bis dahin untereinander nicht in einer Verschränkungsbeziehung stehende Netzwerkknoten entsprechend einem gewichteten Shortest Path Algorithmus erfolgt. Dafür wird durch Netzwerkeinrichtungen eines übergeordneten Netzmanagements mittels eines dort gebildeten Graphen, dessen Knoten mit den Netzwerkknoten des Quantennetzwerks und dessen Kanten mit jeweils zwei dieser Netzwerkknoten direkt miteinander verbindenden, mögliche Abschnitte eins Netzwerkpfades bildenden Quantenkanälen des Quantennetzwerks assoziiert sind, in dem Quantennetzwerk ein Netzwerkpfad bestimmt wird, welcher gewichtet mit der, bei seiner Nutzung einer für ihn insgesamt gegebenen Fidelty, der kürzeste unter den zur Weitergabe der jeweiligen Verschränkungsbeziehung in Betracht kommenden Netzwerkpfade ist. Bei dem zur Anwendung kommenden Algorithmus, kann es sich beispielsweise um den mit der Fidelity gewichteten Dijkstra-Algorithmus handeln.

Ein durch die Einrichtungen des übergeordneten Netzmanagements für das Routing einer jeweiligen Verschränkungsbeziehung entlang des dafür ermittelten Netzwerkpfades erstelltes Routingprotokoll wird durch klassische Computereinrichtungen ausgeführt. Diese Computereinrichtungen, von denen jeweils mindestens eine in jedem der Netzwerkknoten des Quantennetzwerks angeordnet ist, wirken miteinander in einem separaten klassischen Steuernetzwerk zusammen, wobei dies durch das übergeordnete Netzmanagement gesteuert werden kann. Jede dieser in den Netzwerkknoten angeordneten klassischen Computereinrichtungen wird dabei dazu ausgebildet und eingerichtet, den mindestens einen, im selben Netzwerkknoten angeordneten Quantenspeicher hinsichtlich der Verwendung der in ihm temporär gespeicherten Verschränkungszustände zur Weitergabe durch diese bestehender Verschränkungsbeziehungen in dem Quantennetzwerk zu steuern. Auch bei dem vorgenannten, zwischen den klassischen Computereinrichtungen der Netzwerkknoten ausgebildeten separaten Steuernetzwerk handelt es sich vorzugsweise um ein optisches Netzwerk.

Für die Weitergabe der Verschränkungsbeziehungen bedient sich das zur Lösung er Aufgabe vorgeschlagene Verfahren des als solches bekannten und daher hier nicht beanspruchten Prinzips des Entanglement Swapping. Hierbei erfolgt in einem jeweiligen eine Verschränkungsbeziehung weitergebenden Netzwerkknoten in Bezug auf zwei unterschiedliche, jeweils durch ein Photon vermittelte Verschränkungszustände eine Bell-Zustandsmessung, in deren Folge der Quantenzustand je eines Teils zweier hinsichtlich eines Quantenzustandes miteinander verschränkter Paare von quantenmechanischen Objekten respektive Teilchen (Photonen, Atome, Moleküle - auch ein Photon kann aufgrund des Welle-Teilchen-Dualismus des Lichtes als Teilchen, nämlich gewissermaßen als Austauschteilchen angesehen werden) vernichtet wird und ein neuer, zuvor nicht existierender Verschränkungszustand entsteht. Im Zusammenhang mit dem Vorgang des Entanglement Swapping wird in der Literatur auch von einem Swapping von Verschränkungszuständen gesprochen, was die weiter oben angesprochene Gleichsetzung der Weitergabe einer Verschränkungsbeziehung mit der Weitergabe eines Verschränkungszustands rechtfertigt.

Die vorgenannten, in den Netzwerkknoten angeordneten, zu dem separaten Steuernetzwerk verbundenen Computereinrichtungen werden daher außerdem dazu ausgebildet und eingerichtet, die Durchführung entsprechender Bell-Zustandsmessungen zu steuern, deren jeweiliges Ergebnis auszuwerten sowie dieses, entsprechend dem dafür ermittelten Netzwerkpfad über die zugehörigen klassischen Kanäle, mindestens zwei bis dahin untereinander nicht in einer Verschränkungsbeziehung stehenden Netzwerkknoten zuzuleiten. Hierdurch wird die jeweilige Verschränkungsbeziehung auf diese mindestens zwei Netzwerkknoten geswapped, also innerhalb des Quantennetzwerks weitergegeben. Die bis dahin nicht in einer Verschränkungsbeziehung stehenden Netzwerkknoten können demnach durch das Entanglement Swapping entstehende Verschränkungszustände gewissermaßen nur durch Vermittlung des dieses ausführenden Netzwerkknotens miteinander teilen. Letzterer kann in diesem Kontext auch als Transferknoten bezeichnet werden. Die sich wie beschrieben vollziehende Weitergabe von Verschränkungsbeziehungen in dem Quantennetzwerk bedeutet indes nicht, dass die am Entanglement Swapping gewissermaßen beteiligten Netzwerkknoten, nämlich die jeweils in einer Verschränkungsbeziehung zu dem Transferknoten stehenden Netzwerkknoten sich dieser jeweiligen zum Transferknoten bestehenden Verschränkungsbeziehung entledigen würden.

Rekapitulierend und etwas kompakter lässt sich das Verfahren also auch wie folgt charakterisieren. Dieses betrifft die Weitergabe von Verschränkungsbeziehungen, welche zwischen Netzwerkknoten eines Quantennetzwerks aufgrund photonisch vermittelter quantenmechanischer Verschränkungszustände bestehen. In einem dafür ausgebildeten Netzwerk, welches das Quantennetzwerk, ein separates klassisches Steuernetzwerk und ein übergeordnetes Netzmanagement umfasst, wird ein dafür jeweils zu verwendender Netzwerkpfad durch Einrichtungen des Netzmanagements mittels eines Shortest Path Algorithmus bestimmt, in dessen Ergebnis derjenige Pfad verwendet wird, der bei einer Gewichtung mit einer für ihn gegeben Fidelity als der kürzeste Pfad anzusehen ist. Ein für das Routing zur Weitergabe einer jeweiligen Verschränkungsbeziehung erstelltes Routingprotokoll wird durch die in den Netzwerkknoten des Quantennetzwerks angeordneten klassischen Computereinrichtungen prozessiert, welche miteinander zu dem separaten klassischen Steuernetzwerk verbunden sind. Hierbei steuert eine jeweilige klassische Computereinrichtung mindestens einen Quantenspeicher und eine Einheit zur Durchführungen von Bell-Zustandsmessungen, welche mit dieser Computereinrichtung zusammen im jeweiligen Netzwerkknoten angeordnet sind. Diese klassische Computereinrichtung wertet ferner die für ein Entanglement Swapping ausgeführten Bell-Zustandsmessungen aus und leitet deren jeweiliges Ergebnis mindestens zwei bis dahin untereinander nicht in einer Verschränkungsbeziehung stehenden Netzwerkknoten zu.

Grundsätzlich ist es denkbar, dass in einem zur Implementierung des vorgeschlagenen Verfahrens eingerichteten Quantennetzwerk photonische Verschränkungszustände zwischen den Netzwerkknoten ausschließlich durch Photonen derselben Wellenlänge, das heißt derselben Frequenz, vermittelt werden. In der Praxis werden jedoch insoweit regelmäßig verschiedene Wellenlängen respektive Frequenzen zum Einsatz gelangen. Dies gilt sicherlich insbesondere im Kontext grenzüberschreitender Netzwerkbeziehungen.

Hierbei ist es vorgesehen, dass vor einer in einem Netzwerkknoten an zwei, sich in verschiedenen, durch unterschiedliche Frequenzen vermittelten Verschränkungszuständen befindenden quantenmechanischen Objekten ausgeführten Bell-Zustandsmessung eine Frequenzkonvertierung erfolgt. Bei einer solchen Frequenzkonvertierung wird, unter Beibehaltung bestehender Verschränkungszustände, die Frequenz eines der beiden quantenmechanischen Objekte in die des jeweils anderen quantenmechanischen Objekts oder die Frequenz beider quantenmechanischen Objekte (zum Beispiel Photonen) in eine andere, beiden quantenmechanischen Objekten gemeinsame Frequenz überführt. Darüber hinaus ist anzumerken, dass - gemäß derzeitigem Stand - ohnehin eine Frequenzkonversion notwendig sein wird, da die Quantenspeicher und die für die optischen Quantenkanäle des Quantennetzwerks verwendeten Fasern auf unterschiedlichen Frequenzen arbeiten, die Quantenspeicher auf 700 nm - 800 nm und die Fasern auf 1550nm

Ein jeweiliger Verschränkungszustand kann in dem mindestens einen Quantenspeicher eines Netzwerkknotens in Form eines Atoms oder Moleküls gespeichert werden, welches innerhalb des Quantennetzwerks mit mindestens einem Photon oder mit mindestens einem anderen Atom oder Molekül hinsichtlich eines Quantenzustandes verschränkt ist. Wie schon ausgeführt, besteht dabei das Wesen des bereits mehrfach angesprochenen Vorgangs des Entanglement Swapping darin, dass der Quantenzustand je eines Teils von zwei hinsichtlich eines Quantenzustandes miteinander verschränkten Paaren (Photon und Photon oder Photon und Atom oder Photon und Molekül) durch eine dafür erforderliche Bell-Zustandsmessung (auch Bell State Measurement BSM) vernichtet wird.

Wie ausgeführt, wird die jeweilige Route zur Weitergabe einer Verschränkungsbeziehung in dem Quantennetzwerk durch den Einsatz eines mit der Fidelity gewichteten Shortest Path Algorithmus ermittelt. Die Fidelity ist hierbei ein Maß für die Güte eines Pfades oder - andersherum betrachtet - für eventuelle auf einem jeweiligen Pfad bestehende Unzulänglichkeiten. Sie wird hierbei durch eine Vielzahl von Faktoren, wie innerhalb des Pfades auftretende Dämpfungen, eventuelle, beispielsweise durch Krümmungen der Lichtleitfasern verursachte Polarisationsmoden-Dispersion, auftretende Gruppenverzögerungen (Group Delay) respektive eine unter anderem durch den jeweiligen Brechungsindex der Fasern beeinflusste Latency, bestimmt. Noch viel stärker wird jedoch die Fidelity insgesamt durch die Fidelity der bereits angesprochenen Bell-Zustandsmessung(en) sowie durch die Fidelity gegebenenfalls erforderlich werdender Frequenzkonversionen bestimmt.

Hohe, in einem für die Weitergabe einer Verschränkungsbeziehung in Betracht kommenden Pfad auftretende Dämpfungen, können aber beispielsweise auch aus einer größeren Zahl sich auf diesem Pfad befindender Spleißstellen oder gepatchter, das heißt Kupplungen für Lichtleifasern aufweisender Stellen resultierenden. Vor diesem können in den zu dem Steuernetzwerk verbundenen klassischen Computereinrichtungen Daten hinterlegt werden, welche als Parameter zur Beschreibung einer allgemeinen, für einen möglichen Pfadabschnitt anzunehmenden Fidelity dienen können. Durch die Berücksichtigung einer solchermaßen für eine Mehrzahl von jeweils durch zwei Netzwerkknoten miteinander verbindende Quantenkanäle gebildete Pfadabschnitte beschriebenen Fidelity können dann Aussagen zur Fidelity eines aus diesen Pfadabschnitten bestehenden, (aufgrund seiner Kürze) für das Routing in Betracht kommenden Pfades getroffen werden.

Das Verfahren kann auch in der Weise implementiert werden, dass die zur Gewichtung herangezogene Fidelity mithilfe einer Mehrzahl, im Bereich der die Endpunkte eines jeweiligen (in Betracht kommenden) Netzwerkpfades ausbildenden Netzwerknoten gemessener Größen bestimmt wird. Hierbei kann die Bestimmung der Fidelity anhand einer Mehrzahl im Bereich der Netzwerkknoten gemessener Größen alternativ oder kumulativ zum Einsatz kommen, wobei im Falle eines kumulativen Einsatzes beispielsweise in festgelegten zeitlichen Abständen die gegebenenfalls für die einzelnen möglichen Pfadabschnitte zur Fidelity getroffenen Annahmen und dazu hinterlegten Daten überprüft werden können.

Unabhängig von gegebenenfalls zur Bestimmung der Fidelity erfolgenden Messungen liegt es auf der Hand, dass Angaben der unmittelbar davor angesprochenen, in den Computereinrichtungen der Netzwerkknoten hinterlegten Art herangezogen werden können, wenn es um die Frage der zur Weitergabe einer Verschränkungsbeziehung von einem ersten Netzwerkknoten zu einem zweiten, von diesem entfernten Netzwerkknoten in Betracht respektive (von vornherein) eben nicht in Betracht zuziehenden Netzwerkpfade geht. Darüber hinaus können möglicherweise Netzwerkpfade, welche eine bestimmte (festgelegte) Gesamtstrecke oder eine maximale Zahl sogenannter Netzwerk-Hops (also zu passierender Netzwerkknoten) überschreiten, außer Betracht bleiben. Es ist wiederum lediglich eine Frage der Implementierung des Verfahrens und der Auslegung eines mit diesem genutzten Netzwerks, welche in geeigneten Einrichtungen des Systems hinterlegte Randbedingungen für die Auswahl der insoweit in Betracht zu ziehenden Netzwerkpfade herangezogen werden.

Bei seiner praktischen Umsetzung sollte das Verfahren so implementiert werden, dass die einzelnen Prozessschritte mit hoher Fidelity, aber auch mit der notwenigen Redundanz durchgeführt werden (= Fehlerkorrektur). Bei einer Fidelity der einzelnen Operationen von zum Beispiel 99%, wird bei einer Prozesslänge von 10 Schritten eine Fidelity von (0,99)¹⁰=90% bzw. bei 100 Schritten von (0,99)¹⁰⁰=37% zu erwarten sein. Daher sollten die Operationen mindestens

N Male ausgeführt werden, so dass die Bedingung N*(Overall Prozess-Fidelity) > 100%, eventuell sogar > 300% gilt. Beispielsweise sollte, bei einer Prozesslänge von 10 Schritten, bei einer Fidelity von 0,99 und einer sich ergebenden Overall Prozess Fidelity von (0,99)10 = 0,90, die Operation mindestens N = 300% x 0,90 = 3 mal ausgeführt werden. Für 100% würden sich entsprechend N = 100% x 0,90 = 2 Operationen ergeben.

Über die vorgenannten, durch die Fidelity bestimmten Randbedingungen und Gewichtungsfaktoren hinaus kann außerdem eine Grundgewichtung mit dafür in den Netzwerkknoten an den Enden der einzelnen Pfadabschnitte durch den Netzwerkbetreiber hinterlegten Gewichtungsinformationen erfolgen. Hierdurch ist es beispielsweise dem Betreiber möglich, zu Wartungs- und/oder Reparaturzwecken einzelne Pfadabschnitte durch die Hinterlegung solcher Gewichtungsinformationen temporär von der Nutzung auszunehmen.

Bei dem die Aufgabe lösenden, zur Durchführung des Verfahren ausgebildeten System für das Routing aufgrund photonisch vermittelter Verschränkungszustände zwischen Netzwerkknoten bestehender Verschränkungsbeziehungen handelt es sich um ein dafür in spezieller Weise ausgebildetes Netzwerk. Dieses umfasst ein Quantennetzwerk mit einer Mehrzahl durch optische Quantenkanäle mit je einem zugehörigen klassischen Kanal verbundener Netzwerkknoten und - wie auch bei den meisten aus dem Stand der Technik bekannten Netzwerken- ein übergeordnetes Netzmanagement. Die vorgenannten Netzwerkknoten stehen jeweils in einer Verschränkungsbeziehung mit mindestens einem anderen Netzwerkknoten des Quantennetzwerks. Hierbei umfasst das übergeordnete Netzmanagement Netzwerkeinrichtungen, die dazu ausgebildet sind, zum Zweck der Wegfindung für das Routing zur Weitergabe einer zwischen Netzwerkkoten bestehenden Verschränkungsbeziehung einen gewichteten Shortest Path Algorithmus auszuführen, mittels welchem ein zur Weitergabe einer jeweiligen Verschränkungsbeziehung in dem Quantennetzwerk verwendeter Netzwerkpfad bestimmt wird.

Die Netzwerkknoten des Quantennetzwerks umfassen jeweils mindestens einen Quantenspeicher, eine Einheit zur Durchführung von Bell-Zustandsmessungen und eine klassische Computereinrichtung. Der mindestens eine Quantenspeicher eines jeweiligen Netzwerkknotens des Quantennetzwerks ist zur temporären Speicherung von Verschränkungszuständen in Zuordnung zu einem sie jeweils eindeutig bezeichnenden Identifikator vorgesehen. Die in den Netzwerkknoten angeordneten klassischen Computereinrichtungen sind zu einem separaten klassischen Steuernetzwerk miteinander verbunden.

In diesem Steuernetzwerk wirken die klassischen Computereinrichtungen für das Routing zur Weitergabe von Verschränkungszuständen entsprechend einem Routingprotokoll zusammen. Sie sind dabei dazu ausgebildet und eingerichtet, bei der Weitergabe von Verschränkungsbeziehungen unter Nutzung einer dafür in dem Quantennetzwerk jeweils gefundenen Route und unter Einbeziehung des Netzwerkknotens, in dem sie angeordnet sind, den mindestens einen in demselben Netzwerkknoten angeordneten Quantenspeicher zur temporären Speicherung von Verschränkungszuständen und hinsichtlich der Verwendung darin gespeicherter Verschränkungszustände zu steuern.

Zumindest diejenigen Netzwerkknoten des Quantennetzwerks, welche sich Verschränkungszustände mit mindestens zwei Netzwerkknoten des Quantennetzwerks teilen, also in einer Verschränkungsbeziehung mit mindestens zwei Netzwerkknoten stehen weisen außerdem eine Einrichtung zur Durchführung von Bell-Zustandsmessungen auf. Ihre Computereinrichtungen sind zudem dazu ausgebildet und eingerichtet, in dem sie umfassenden Netzwerkknoten zur Weitergabe von Verschränkungszuständen durch Entanglement Swapping erfolgende Bell-Zustandsmessungen auszuwerten und das Ergebnis einer jeweiligen Messung entsprechend der berechneten Route über die klassischen Kanäle des Quantennetzwerks mindestens zwei bis dahin untereinander nicht in einer Verschränkungsbeziehung stehenden Netzwerkknoten zuzuleiten.

Wie die vorstehenden Ausführungen erkennen lassen, müssten in dem beschriebenen System im Grunde nicht alle Netzwerkknoten des Quantennetzes eine Einrichtung zur Durchführung von Bell-Zustandsmessungen aufweisen, so beispielsweise Edge-Knoten respektive sich am Rand des Netzwerks befindende Netzwerkknoten, also Netzwerkknoten, in den im Rahmen einer bestehenden Systemkonfiguration kein Entanglement Swapping erfolgt. Die klassischen Computereinrichtungen dieser Netzwerkknoten könnten zudem mit einer geringen Funktionalität versehen werden, da sie wegen des Fehlens einer entsprechenden Einrichtung keine Bell-Zustandsmessungen auswerten müssten. Aus praktischen Erwägungen heraus, insbesondere unter dem Gesichtspunkt möglicher Netzwerkserweiterungen wird man aber vorzugsweise alle Netzwerkknoten des Quantennetzwerks in gleicher Weise ausstatten respektive sie mit Mitteln zur Durchführung von Bell-Zustandsmessungen ausstatten und ihre klassischen Computereinrichtungen zur Auswertung derartiger Messungen sowie zur Weitergabe dabei erhaltener Ergebnisse ertüchtigen.

Da, wie zum Verfahren bereits angesprochen, in einem entsprechenden Quantennetzwerk typischerweise Verschränkungszustände vermittelnde Photonen unterschiedlicher Wellenlänge respektive Frequenz zum Einsatz kommen werden, weist entsprechend einer praktischen Ausbildungsform des Systems jeder Netzwerkknoten einen Frequenzkonverter auf, der dazu ausgebildet ist, die Frequenz sich in durch Photonen vermittelten Verschränkungszuständen befindenden quantenmechanischen Objekten unter Beibehaltung der jeweiligen Verschränkungszustände zu verändern.

Was die zuvor schon vielfach angesprochenen, sich gegebenenfalls auch hinsichtlich ihrer jeweiligen Speicherfrequenz unterscheidenden Quantenspeicher anbelangt, kommen für deren Realisierung unterschiedliche Möglichkeiten in Betracht. Es kann sich hierbei beispielsweise um Atomfallen, Pauli-Fallen, Diamantenpunkte oder Quantenpunkte handeln. Unter dem Gesichtspunkt eines möglichst geringen Kostenaufwands könnte aber auch eine Realisierung mithilfe konfigurierbarer Verzögerungsstrecken sehr vorteilhaft sein. Eine solche, auch als Delay-System bezeichnete Verzögerungsstrecke würde man ebenfalls in dem jeweiligen Netzwerkknoten ausbilden. Insbesondere betrachtet auf das gesamte Netzwerk ist darüber hinaus grundsätzlich auch der Einsatz unterschiedlicher, einschließlich der vorstehend nur beispielhaft genannten Speichertechniken möglich.

Darüber hinaus kann jeder Netzwerkknoten des Quantennetzwerks mehrere, zur Speicherung durch Photonen vermittelter quantenmechanischer Verschränkungszustände ausgebildete Quantenspeicher und ein N x N Arrayed Waveguide Grating AWG umfassen. Die mehreren Quantenspeicher eines Netzwerkknotens unterscheiden sich dabei hinsichtlich der Wellenlänge, mit welcher Verschränkungszustände durch Photonen an sie vermittelbar sind, wobei die Ein- und Ausgangsports des N x N AWG eines jeweiligen Netzwerkknotens zur wellenlängenrichtigen Adressierung der Quantenspeicher verschaltet sind.

Als ein großer Vorteil der zuletzt beschriebenen Ausbildungsform ist es anzusehen, dass aufgrund der Nutzung des N x N AWG als zentraler quantenoptischer Integrationspunkt des jeweiligen Netzwerkknotens keine optischen Elemente aktiv gesteuert werden müssen. Der Aufbau ist optisch vollkommen passiv. Die klassischen Kanäle des Quantennetzwerks interagieren ausschließlich mit den Quantenspeichern und übermitteln die Ergebnisse der Bell-Zustandsmessungen. Die in einem Netzwerkknoten angeordnete und in dem klassischen Steuernetzwerk vernetzte Computereinrichtung gibt dem mindestens einen Quantenspeicher desselben Netzwerkknotens die quantenmechanischen Objekte vor, die entweder der BSM (Bell State Measurement) oder einer Frequenzkonversion zugeführt werden sollen. Das hierdurch realisierte Kontrollsystem hält die Ergebnisse der Frequenzkonversionen und BSM-Operationen auf klassischer ID-Ebene nach, so dass stets einen Überblick darüber besteht, welche quantenmechanischen Objekte an unterschiedlichen Orten miteinander verschränkt sind.

Verschränkungsbeziehungen zwischen den Netzwerkknoten vermittelnde Photonen, können in dem System beispielsweise von einer Photonenquelle erzeugt werden, die innerhalb eines, aus zwei Netzwerkknoten und einen sie verbindenden Quantenkanal bestehenden Quantenlinks mindestens eine Photonenquelle angeordnet ist. Diese Photonenquelle ist dazu ausgebildet, Photonen zu erzeugen, die paarweise hinsichtlich eines Quantenzustands verschränkt sind, sowie an jeden der über den Quantenkanal miteinander verbundenen Netzwerkknoten jeweils ein Photon eines jeweiligen Paares hinsichtlich eines Quantenzustands miteinander verschränkter Photonen auszusenden. Beim Empfang der hinsichtlich eines Quantenzustands miteinander verschränkten Photonen durch die über den Quantenkanal verbundenen Netzwerkknoten entsteht zwischen diesen eine Verschränkungsbeziehung. In einer solchen Konstellation kann die mindestens eine Photonenquelle auch innerhalb eines der Netzwerkknoten des Quantenlinks angeordnet sein kann. Denkbar - und insoweit ebenfalls vor der hier vorgestellten sowie beanspruchten Lösung umfasst - ist aber auch die Möglichkeit, dass in dem Quantenlink eine Photonenquelle angeordnet ist, welche hinsichtlich der Wellenlänge (Lichtfarbe) veränderlich ist, also jeweils miteinander bezüglich eines Quantenzustands verschränkte Paare von Photonen mit unterschiedlicher Wellenlänge generieren kann. Entsprechende Photonen würden dann in einem jeweiligen Quantenkanal, beispielsweise unter Nutzung des Prinzips der DWDM (Dense Wavelength Division Multiplexing), übertragen werden.

Nachfolgend soll anhand von Zeichnungen ein Ausführungsbeispiel für die Erfindung gegeben werden. Anhand der Zeichnungen sollen dabei sowohl Verfahrensaspekte als auch Aspekte respektive Details eines zur Durchführung des Verfahrens ausgebildeten Systems beispielhaft erläutert werden. In den zugehörigen Zeichnungen zeigen:
- Fig. 1:: die schematische Darstellung einer beispielhaften, acht Netzwerkknoten umfassenden Ausbildungsform des Systems,
- Fig. 2:: eine graphische Symboldarstellung für ein Routing-Protokoll und dessen Abarbeitung in dem System gemäß Fig. 1.

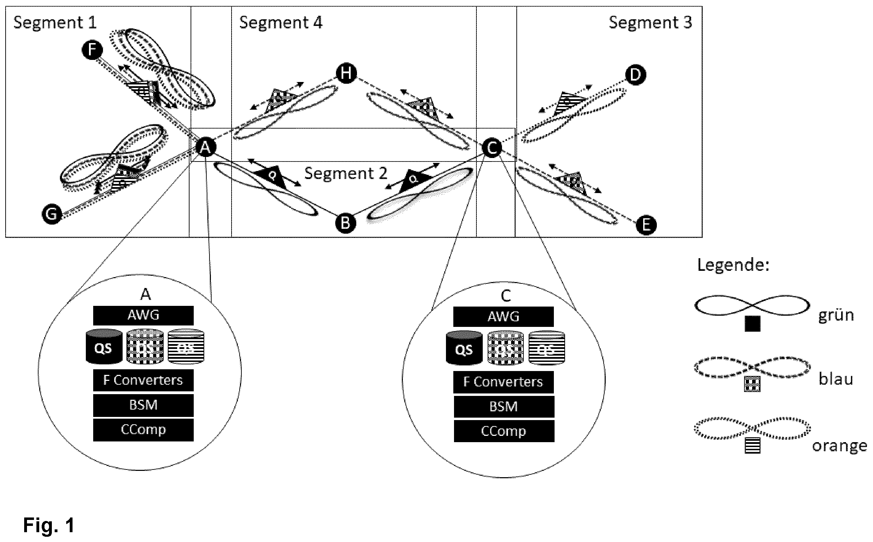

Die Fig. 1 zeigt eine schematische Darstellung einer möglichen Ausbildungsform des erfindungsgemäßen Systems. Es handelt sich hierbei um ein aus acht Netzwerkknoten bestehendes Quantennetzwerk für die Weitergabe von zwischen diesen Netzwerkknoten bestehenden Verschränkungsbeziehungen respektive von photonischen Verschränkungszuständen. Auf die Darstellung des ebenfalls zum System gehörenden separaten klassischen Steuernetzwerks, welche die in den Netzwerkknoten angeordneten klassischen Computer miteinander verbindet, ist aus Gründen der Übersichtlichkeit ebenso verzichtet worden, wie auf die Darstellung der zu den jeweiligen Quantenkanälen gehörenden speziellen klassischen Steuerkanäle und des übergeordneten Netzmanagements.

Das beispielhaft in der Fig. 1 gezeigte Quantennetzwerk kann gedanklich in vier Segmente (Segment 1 bis Segment 4) unterteilt werden. An den Übergängen zwischen den einzelnen Segmenten befinden sich Netzwerkknoten - hier der Netzwerkknoten A und der Netzwerkknoten C -, in welchen bei der dargestellten Konstellation quantenmechanische Verschränkungszustände respektive aufgrund dessen zwischen Netzwerkknoten bestehende Verschränkungsbeziehungen durch Entanglement Swapping von einem Segment zum anderen weitergegeben werden.

In einer für die Netzwerkknoten A und C jeweils herausgezogenen Detaildarstellung sind die wesentlichem von diesen Netzwerkknoten zur Ausführung des erfindungsgemäßen Verfahrens umfassten Komponenten gezeigt. Auch im Hinblick auf eventuelle spätere Erweiterungen wird ein Netzwerk der gezeigten Art aus praktischen Erwägungen typischerweise so ausgebildet sein, dass alle gezeigten Netzwerkknoten A bis H einen vergleichbaren Aufbau aufweisen und im Wesentlichen die gleichen Komponenten umfassen, welche exemplarisch für die Netzwerkknoten A und C gezeigt sind.

Demnach umfasst ein jeweiliger Netzwerkknoten unteranderem einen klassischen Computer (CComp) und ein N x N Arrayed Waveguide Grating (N x N AWG), durch welches von Photonen unterschiedlicher Farbe vermittelte quantenmechanische Verschränkungszustände in Abhängigkeit ihrer jeweiligen Frequenz unterschiedlichen, ebenfalls vom Netzwerkknoten umfassten Quantenspeichern QS zugeführt werden. Die Zuführung zu den einzelnen Quantenspeichern mittels des jeweiligen N x N AWG erfolgt hierbei passiv und transparent durch feste Verschaltung der Eingangsports des N x N AWG mit jeweils einem ganz bestimmten, die photonische Wellenlänge an den dafür ausgebildeten Quantenspeicher weiterleitenden Ausgangsport des N x N AWG. Ferner umfasst eine jeweiliger Netzwerkknoten eine Einheit zur Durchführung von Bell Zustandsmessungen (BSM) und vorzugsweise einen oder mehrere Frequenzkonverter (F Converters).

In der Fig. 1 sind die unterschiedlichen Farben der untereinander in Verschränkungszuständen stehenden, durch die jeweiligen in den Quantenkanälen angeordneten Photonenquellen ausgesendeten Photonen entsprechend der zur Zeichnung gehörenden Farblegende dargestellt. Zu jedem der Quantenkanäle, in welche jeweils eine hinsichtlich ihres Quantenzustands miteinander verschränkte Photonenpaare aussendende Photonenquelle eingefügt ist, gehört, wie bereits an früherer Stelle ausgeführt, jeweils einen speziellen gesicherter klassischer Kanal, auf dessen Darstellung aus Übersichtlichkeitsgründen ebenfalls verzichtet wurde.

Jede zwischen zwei Netzwerkknoten in dem jeweiligen Quantenkanal angeordnete Photonenquelle sendet ein Photon eines erzeugten, hinsichtlich eines Quantenzustands miteinander verschränkten Photonenpaares an einen ersten mit dem Quantenkanal gekoppelten Netzwerkknoten und das jeweils andere Photon des Photonenpaares an den anderen mit dem Quantenkanal gekoppelten Netzwerkknoten. Demgemäß liegen an den durch die jeweiligen Netzwerkknoten gebildeten Endpunkten der Quantenkanäle jeweils quantenmechanische Verschränkungszustände vor, welche durch eine jeweilige, durch die Photonenquelle bestimmte Wellenlänge vermittelt werden. Die betreffenden Netzwerkknoten stehen hierdurch in einer Verschränkungsbeziehung.

Die Festlegung einer Route, welche durch Einrichtungen des übergeordneten Managements vorzugsweise unter Rückgriff auf in den klassischen Computereinrichtungen in den Netzwerkknoten gehaltenen Informationen zur Fidelity erfolgt, kann dabei beispielsweise nach folgenden Grundsätzen erfolgen:
A. Suche eine klassische Route zwischen den zwei Netzwerkknoten mit Hilfe eines Optimierungsalgorithmus, nämlich eines durch die Fidelity gewichteten Shortest Path Algorithmus.
B. Überprüfe die Machbarkeit der Lösung, das heißt überprüfe, ob Verschränkungszustände zwischen in Quantenspeichern von Netzwerkknoten entlang der Route gehaltenen quantenmechanischen Objekten aufgebaut werden oder aufgebaut worden sind.
   a. Wenn ja, dann gehe zu Schritt C.
   b. Wenn nein, dann gehe zurück zu Schritt A und berechne eine Alternativroute, zum Beispiel den nächstlängsten Pfad.
C. Berechne die Entanglement Swapping Strategie, das heißt bestimme die Netzwerkknoten, in denen BSM-Operationen, also Bell-Zustandsmessungen ausgeführt werden müssen. Bestimme auch die Reihenfolge, in denen die BSM-Operationen ausgeführt werden müssen sowie gegebenenfalls erforderlich werdende Frequenzkonversionen.
D. Das Routing wird entsprechend der gefundenen Route ausgeführt.

Das Quantennetzwerk wird dazu in Form eines mathematischen Graphen abgebildet, wobei die Knoten des Graphens die Netzwerkknoten des Quantennetzwerks sind und die Kanten die diese Netzwerkknoten verbindenden Quantenkanäle, die mit hinsichtlich ihres Quantenzustands verschränkten Photonen (gegebenenfalls unterschiedlicher) Frequenz beschickt werden.

Attribute der Netzwerkknoten sind hierbei:
- Geographische Position des jeweiligen Netzwerkknotens,
- Anzahl der gespeicherten quantenmechanischen Objekte pro Frequenz in den Quantenspeichern des Netzwerkknotens,
- Vorhandensein einer Einrichtung für Bell-Zustandsmessungen (BSM) und deren Fidelity,
- Erforderlichenfalls Vorhandensein eines Frequenzkonverters und dessen Konversions-Fidelity,
- Vorhandsein eines Quantenspeichers und dessen Input / Output Fidelity.

Kantenattribute sind:
- Länge der Verbindung,
- Dämpfung der Verbindung,
- Frequenz des Quantenkanals und somit der hierüber Verschränkungszustände vermittelnden Photonen.

Mit Blick auf die in der Fig. 1 gezeigte Konstellation könnte die Weitergabe einer Verschränkungsbeziehung, nämlich die Etablierung einer Beschränkungsbeziehung zwischen den eine solche zunächst nicht aufweisenden Netzwerkknoten F und D über das Segment 2 oder über das Segment 4 erfolgen. Beide insoweit denkbaren Pfade erfordern, wie ersichtlich, dieselbe Anzahl von Hops, also das Passieren einer gleichen Anzahl zwischen den Netzwerkknoten F und D angeordneter Netzwerkknoten. Es wäre sogar denkbar, dass die jeweils zu überwindende Entfernung in beiden Fällen annähernd dieselbe ist. Dennoch wird vorliegend beispielhaft davon ausgegangen, dass aufgrund einer unterschiedlichen für die beiden Netzwerkpfade gegebenen, vorzugsweise gemessenen Fidelity der über das Segment 2 führende Netzwerkpfad gewählt wird.

Die Weiterleitung von (photonisch vermittelten) quantenmechanischen Verschränkungszuständen respektive der durch diese bestehenden Verschränkungsbeziehungen nach dem zuvor dargestellten Routing-Protokoll unter Nutzung eines über das Segment 2 geführten Netzwerkpfades kann sich dabei beispielsweise wie folgt vollziehen. Zunächst können Verschränkungszustände, welche zwischen den beiden Photonen bestehen, die durch die zwischen den Netzwerkknoten A und B angeordnete Photonenquelle einerseits zum Netzwerkknoten A und andererseits zum Netzwerkknoten B ausgesendet werden, sowie zwischen Photonen, die von der zwischen dem Netzwerkknoten B und dem Netzwerkknoten C angeordneten Photonenquelle ausgesendet werden, in dem Netzwerkknoten B durch entsprechende Bell-Zustandsmessungen mittels der dafür in dem Netzwerkknoten B vorgesehenen Bell-Zustandsmesseinrichtung BSM und durch die Auswertung der jeweiligen Messungen sowie die Weitergabe des Ergebnisses an die Netzwerkknoten A und C auf diese beiden Netzwerkknoten (A und C) geswapped werden.

Demnach werden zwischen dem Netzwerkknoten A und dem Netzwerkknoten B einerseits sowie zwischen dem Netzwerkknoten C und dem Netzwerkknoten B andererseits bestehende Verschränkungsbeziehungen an die nicht direkt über einen Quantenkanal miteinander verbundenen Netzwerkknoten A und C weitergegeben, so dass diese beiden Netzwerkknoten auch in einer Verschränkungsbeziehung zueinander stehen. Der entsprechende Verschränkungszustand kann dann einerseits nachfolgend im Netzwerkknoten A - wiederum durch Ausführung entsprechender Bell-Zustandsmessungen und Weitergabe des durch Auswertung mittels des klassischen Computers erhaltenen Ergebnisses an die Netzwerkknoten F und B - auf die Netzwerkknoten F und B geswapped werden.

Da sowohl eine zwischen dem Netzwerkknoten F und dem Netzwerkknoten A angeordnete Photonenquelle als auch die zwischen dem Netzwerkknoten A und dem Netzwerkknoten B angeordnete Photonenquelle miteinander verschränkte Photonen mit einer der Farbe Grün entsprechenden Wellenlänge aussenden, kann hier das Swapping im Netzwerkknoten A durch entsprechende Bell-Zustandsmessung unmittelbar geschehen.

Ähnliches geschieht in dem Netzwerkknoten C, mittels welchem zwischen B und C sowie zwischen C und D bestehende Verschränkungszustände auf die Netzwerkknoten B und D geswapped werden. Allerdings ist es hierbei erforderlich, zwischen den Netzwerkknoten B und C bestehende, durch Photonen mit einer der Farbe Grün entsprechenden Wellenlänge vermittelte Verschränkungszustände zunächst mittels eines in dem Netzwerkknoten C angeordneten Frequenzkonverters in eine der Farbe Orange entsprechende Wellenlänge zu konvertieren, damit eine Bell-Zustandsmessung mit den durch die Photonenquelle zwischen den Netzwerkknoten C und D in einer der Farbe Orange entsprechenden Wellenlänge ausgesendeten Photonen, als Teil eines verschränkten Photonenpaares, erfolgen können.

Durch das zwischen den Netzwerkknoten F und B, also im Übergang zwischen dem Segment 1 und dem Segment 2 erfolgende Swapping von Verschränkungszuständen sowie durch das im Netzwerkknoten C, also im Übergang zwischen dem Segment 2 und dem Segment 3 erfolgende Swapping von Verschränkungszuständen ist letztlich eine Weitergabe und somit eine Etablierung eines Verschränkungsverhältnisses zwischen den Netzwerkknoten F und D gewährleistet. Der gesamte entsprechend der festgelegten Route erfolgende Vorgang der Weitergabe von Verschränkungszuständen durch Entanglement Swapping in den Netzwerkknoten A, B und C wird in Bezug auf den jeweiligen Netzwerkknoten durch die darin angeordnete klassische Computereinrichtung und deren jeweiligen Zugriff auf den im Hinblick auf die Frequenz richtigen Quantenspeicher gesteuert und insgesamt durch eine oder mehrere zentrale (hier nicht dargestellte) Einrichtungen des übergeordneten Netzmanagements orchestriert.

Die IDs der hinsichtlich eines Quantenzustands mit einander verschränkten quantenmechanischen Objekte müssen über das klassische Computernetzwerk (Steuernetzwerk) kommuniziert und von den Computereinrichtungen in den Netzwerkknoten nachgehalten werden, damit stets klar ist, welches quantenmechanische Objekt im Quantenspeicher mit welchem anderen quantenmechanischen Objekt verschränkt ist.

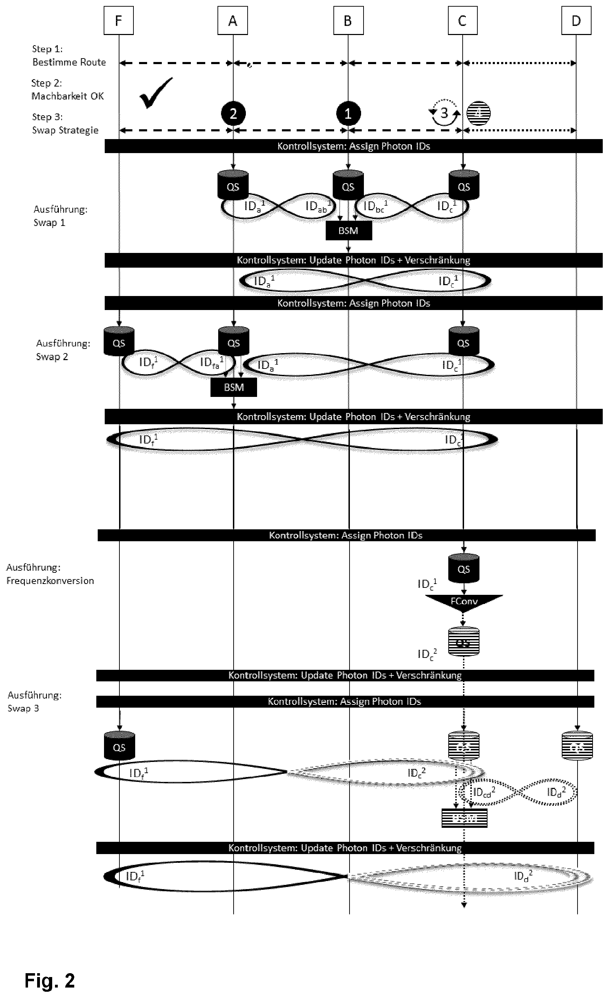

Die zuvor erläuterten Abläufe sind in der Fig. 2 nochmals in der Art eines Ablaufschemas verdeutlicht. In den ersten Schritten wird die Route berechnet, in den weiteren Schritten das Zusammenspiel der Komponenten eines jeden Internetknotens dargestellt. Gestrichelte Pfeile indizieren einen Quantenkanal, volle Pfeile einen klassischen Kanal. In der Ausführung des Routingprotokolls kommunizieren die Einrichtungen des übergeordneten Netzmanagements mit den durch das separate Steuernetzwerk vernetzten Computereinrichtungen der Netzwerkknoten. Die IDs der Photonen und deren Verschränkungspartner (der mit ihnen hinsichtlich eines Quantenzustands verschränkten quantenmechanischen Objekte werden nachgehalten.

Im Schritt 3 der Ausführung des Routingprotokolls wird ein Photon, unter Beibehaltung der äußeren Verschränkung, frequenzkonvertiert. Anschließend wird der letzte Entanglement Swap durchgeführt. In der Ausführung des Routingprotokolls kommuniziert das klassische Kontrollsystem (Steuernetzwerk der klassischen Computereinrichtungen in den Netzwerkknoten) mit den Quantenspeichern und verarbeitet das Ergebnis der Bell-Zustandsmessung. Die IDs der Photonen und deren Verschränkungspartner werden nachgehalten.

Nach erfolgtem Scheduling der Prozessschritte (die zeitliche Planung der Abfolge) durch eine klassische Computereinrichtung erfolgt die automatische Ausführung des Protokolls und die Steuerung der Quantenkommunikationskomponenten. Ein Orchestrierungssystem des übergeordneten Netzmanagements weist nun die einzelnen quantenmechanischen Komponenten und klassischen Systeme der Reihe nach an, wie die quantenmechanischen Verschränkungszustände zu erzeugen, zu speichern, (hinsichtlich der Frequenz) zu konvertieren und zu swappen sind, so dass am Ende der gewünschte verschränkte photonische Verschränkungszustand im Quantennetzwerk verteilt wurde.

## Patentansprüche

1. Verfahren für das Routing aufgrund photonisch vermittelter quantenmechanischer Verschränkungszustände zwischen Netzwerkknoten bestehender Verschränkungsbeziehungen in einem Quantennetzwerk, nämlich für eine die Wegfindung durch dieses Quantennetzwerk einschließende Weitergabe solcher Verschränkungsbeziehungen zwischen einer Mehrzahl durch optische Quantenkanäle mit je einem zugeordneten klassischen Kanal zu dem Quantennetzwerk verbundener Netzwerkknoten, von denen jeder in einer Verschränkungsbeziehung mit mindestens einem anderen Netzwerkknoten des Quantennetzwerks steht, **dadurch gekennzeichnet, dass** die Wegfindung für das Routing zur Weitergabe einer zwischen Netzwerkkoten bestehenden Verschränkungsbeziehung an bis dahin untereinander nicht in einer Verschränkungsbeziehung stehende Netzwerkknoten entsprechend einem gewichteten Shortest Path Algorithmus erfolgt, indem durch Netzwerkeinrichtungen eines übergeordneten Netzmanagements mittels eines dort gebildeten Graphen, dessen Knoten mit den Netzwerkknoten und dessen Kanten mit jeweils zwei dieser Netzwerkknoten direkt miteinander verbindenden, mögliche Abschnitte eins Netzwerkpfades bildenden Quantenkanälen des Quantennetzwerks assoziiert sind, in dem Quantennetzwerk ein Netzwerkpfad bestimmt wird, welcher gewichtet mit der, bei seiner Nutzung einer für ihn insgesamt gegebenen Fidelity, der kürzeste unter den zur Weitergabe der jeweiligen Verschränkungsbeziehung in Betracht kommenden Netzwerkpfade ist, und dass ein durch die Einrichtungen des übergeordneten Netzmanagements für das Routing einer jeweiligen Verschränkungsbeziehung entlang des dafür ermittelten Netzwerkpfades erstelltes Routingprotokoll durch miteinander in einem separaten Steuernetzwerk zusammenwirkende klassische Computereinrichtungen ausgeführt wird, von denen jeweils mindestens eine in jedem der Netzwerkknoten des Quantennetzwerks angeordnet sowie dazu ausgebildet und eingerichtet wird,
- mindestens einen, im jeweils selben Netzwerkknoten angeordneten Quantenspeicher für eine temporäre Speicherung von mittels eines Identifikators eindeutig bezeichneten Verschränkungszuständen und deren Verwendung zur Weitergabe jeweiliger, durch sie bestehender Verschränkungsbeziehungen in dem Quantennetzwerk zu steuern,
- Bell-Zustandsmessungen, welche in dem sie umfassenden Netzwerkknoten für eine durch Entanglement Swapping erfolgende Weitergabe von Verschränkungsbeziehungen durchgeführt werden, die zwischen diesem Netzwerkknoten und jeweils mindestens zwei anderen Netzwerkknoten bestehen, auszuwerten sowie das jeweilige Ergebnis einer Messung, mindestens zwei bis dahin untereinander nicht in einer Verschränkungsbeziehung stehenden Netzwerkknoten entsprechend dem dafür ermittelten Netzwerkpfad über klassische Kanäle des Quantennetzwerks zuzuleiten und hierdurch die Verschränkungsbeziehung auf diese mindestens zwei Netzwerkknoten zu swappen, das heißt die Verschränkungsbeziehung innerhalb des Quantennetzwerks weiterzugeben.

2. Verfahren nach Anspruch 1, wobei in dem Quantennetzwerk bestehende Verschränkungsbeziehungen durch Photonenpaare unterschiedlicher Wellenlänge und somit Frequenz vermittelt werden, **dadurch gekennzeichnet, dass** in einem jeweiligen Netzwerkknoten hinsichtlich zweier, sich in verschiedenen, mit unterschiedlicher Frequenz vermittelten Verschränkungszuständen befindender quantenmechanischer Objekte vor einer Bell-Zustandsmessung oder vor einer Einspeicherung der durch diese quantenmechanischen Objekte vermittelten Verschränkungszustände in Quantenspeicher unterschiedlicher Speicherfrequenz eine Frequenzkonvertierung erfolgt, bei welcher, unter Beibehaltung bestehender Verschränkungszustände, die Frequenz eines der beiden quantenmechanischen Objekte in die des jeweils anderen quantenmechanischen Objekts oder die Frequenz beider quantenmechanischen Objekte in eine andere, beiden quantenmechanischen Objekten gemeinsame Frequenz überführt wird.

3. Verfahren nach Anspruch 1 oder 2, **dadurch gekennzeichnet, dass** der aufgrund der vorgenommen Gewichtung kürzeste Netzwerkpfad durch die mit der Fidelity gewichtete Anwendung des Dijkstra-Algorithmus auf den Graphen des Quantennetzwerks ermittelt wird.

4. Verfahren nach einem der Ansprüche 1 bis 3, **dadurch gekennzeichnet, dass** die Fidelity für die im Rahmen des Shortest Path Algorithmus erfolgende Gewichtung anhand dafür in den die Endpunkte eines jeweiligen Netzwerkpfades ausbildenden Netzwerkknoten vorgenommener Messungen bestimmt wird.

5. Verfahren nach einem der Ansprüche 1 bis 4, **dadurch gekennzeichnet, dass** bei der Bestimmung eines jeweiligen Netzwerkpfades zur Weitergabe bestehender Verschränkungsbeziehungen zusätzlich eine Grundgewichtung durch dafür in den Netzwerkknoten an den Enden der einzelnen Pfadabschnitte hinterlegte Gewichtungsinformationen erfolgt.

6. System für das Routing aufgrund photonisch vermittelter quantenmechanischer Verschränkungszustände zwischen Netzwerkknoten bestehender Verschränkungsbeziehungen, nämlich dafür ausgebildetes Netzwerk mit einem übergeordneten Netzmanagement und mit einer Mehrzahl durch optische Quantenkanäle mit je einem diesen zugordneten klassischen Kanal zu dem Quantennetzwerk verbundener Netzwerkknoten, von denen jeder in einer Verschränkungsbeziehung mit mindestens einem anderen Netzwerkknoten des Quantennetzwerks steht, **dadurch gekennzeichnet, dass** das Netzwerk ausgebildet ist durch das vorgenannte Quantennetzwerk und ein dieses ergänzendes separates Steuernetzwerk und dass das übergeordnete Netzmanagement Netzwerkeinrichtungen umfasst, die dazu ausgebildet sind, zum Zweck der Wegfindung für das Routing zur Weitergabe einer zwischen Netzwerkkoten bestehenden Verschränkungsbeziehung einen gewichteten Shortest Path Algorithmus auszuführen, mittels welchem ein Netzwerkpfad bestimmt wird, welcher gewichtet mit der, bei seiner Nutzung einer für ihn insgesamt gegebenen Fidelity, den kürzesten unter den zur Weitergabe der jeweiligen Verschränkungsbeziehung in Betracht kommenden Netzwerkpfade darstellt, wobei jeder Netzwerkknoten des Quantennetzwerks mit einer klassischen Computereinrichtung ausgestattet ist und diese zu dem separaten Steuernetzwerk miteinander verbundenen klassischen Computereinrichtungen jeweils dazu ausgebildet und eingerichtet sind, ein durch das übergeordnete Netzmanagements für das Routing einer jeweiligen Verschränkungsbeziehung entlang des dafür ermittelten Netzwerkpfades erstelltes Routingprotokoll auszuführen, indem sie
- mindestens einen im jeweils selben Netzwerkknoten angeordneten Quantenspeicher zur temporären Speicherung von Verschränkungszuständen in Zuordnung zu einem sie jeweils eindeutig bezeichnenden Identifikator und zur Verwendung darin gespeicherter Verschränkungszustände sowie eine vom selben Netzwerkknoten umfasste Einheit zur Durchführung von Bell-Zustandsmessungen ansteuern;
- in dem sie jeweils umfassenden Netzwerkknoten ausgeführte Bell-Zustandsmessungen auswerten und das Ergebnis einer jeweiligen Messung entsprechend der berechneten Route mindestens zwei bis dahin untereinander nicht in einer Verschränkungsbeziehung stehenden Netzwerkknoten zuleiten.

7. System nach Anspruch 6, **dadurch gekennzeichnet, dass** jeder Netzwerkknoten einen Frequenzkonverter umfasst, der dazu ausgebildet ist, die Frequenz sich in Verschränkungszuständen befindender Photonen unter Beibehaltung der jeweiligen Verschränkungszustände zu verändern.

8. System nach Anspruch 7, **dadurch gekennzeichnet, dass** jeder Netzwerkknoten des Quantennetzwerks mehrere, zur Speicherung durch Photonen vermittelter quantenmechanischer Verschränkungszustände ausgebildete Quantenspeicher und ein N x N Arrayed Waveguide Grating AWG umfasst und dass sich die einzelnen Quantenspeicher eines jeweiligen Netzwerkknotens hinsichtlich der Wellenlänge unterscheiden, mit welcher Verschränkungszustände durch Photonen an sie vermittelbar sind, wobei die Ein- und Ausgangsports des N x N AWG eines jeweiligen Netzwerkknotens zur wellenlängenrichtigen Adressierung der Quantenspeicher verschaltet sind.

9. System nach einem der Anspruch 6 bis 8, **dadurch gekennzeichnet, dass** innerhalb eines zwischen zwei Netzwerkknoten durch einen sie verbindenden Quantenkanal bestehenden Quantenlinks mindestens eine Photonenquelle angeordnet ist, welche dazu ausgebildet ist, Photonen zu erzeugen, die paarweise hinsichtlich eines Quantenzustands verschränkt sind, sowie an jeden der über den Quantenkanal miteinander verbundenen Netzwerkknoten jeweils ein Photon eines jeweiligen Paares hinsichtlich eines Quantenzustands miteinander verschränkter Photonen auszusenden, durch deren Empfang eine Verschränkungsbeziehung zwischen den sie empfangenden Netzwerkknoten entsteht, wobei die mindestens eine Photonenquelle auch innerhalb eines der Netzwerkknoten des Quantenlinks angeordnet sein kann.

10. System nach einem der Ansprüche 6 bis 9, **dadurch gekennzeichnet, dass** mindestens ein Quantenspeicher eines Netzwerkknotens durch eine konfigurierbare Verzögerungsstrecke ausgebildet ist.

11. System nach einem der Ansprüche 6 bis 9, **dadurch gekennzeichnet, dass** mindestens ein Quantenspeicher eines Netzwerkknotens durch eine Atomfalle ausgebildet ist.

12. System nach einem der Ansprüche 6 bis 9, **dadurch gekennzeichnet, dass** mindestens ein Quantenspeicher eines Netzwerkknotens durch einen Diamantenpunkt ausgebildet ist.

13. System nach einem der Ansprüche 6 bis 9, **dadurch gekennzeichnet, dass** mindestens ein Quantenspeicher eines Netzwerkknotens durch einen Quantenpunkt ausgebildet ist.

14. System nach einem der Ansprüche 6 bis 9, **dadurch gekennzeichnet, dass** der mindestens eine Quantenspeicher eines Netzwerkknotens durch eine Pauli-Falle ausgebildet ist.

## Claims

1. Method for routing entanglement relationships existing between network nodes based on photonically mediated quantum mechanical entanglement states in a quantum network, namely for a passing on of such entanglement relationships, including pathfinding through this quantum network, between a plurality of network nodes connected to the quantum network by optical quantum channels each with an assigned classical channel, each of which is in an entanglement relationship with at least one other network node of the quantum network, **characterized in that** the pathfinding for the routing for the passing on of an entanglement relationship existing between network nodes to network nodes that were previously not in an entanglement relationship with one another is carried out according to a weighted shortest path algorithm, by determining a network path in the quantum network by means of network devices of a higher-level network management using a graph formed there, the nodes of which are associated with the network nodes and the edges of which are associated with quantum channels of the quantum network that directly connect two of these network nodes to each other and form possible sections of a network path, which network path, weighted with an overall fidelity given for it when it is used, is the shortest among the network paths coming into consideration for passing on the respective entanglement relationship, and **in that** a routing protocol created by the devices of the higher-level network management for the routing of a respective entanglement relationship along the network path determined for this purpose is executed by classical computer devices cooperating with one another in a separate control network, of which at least one is arranged in each of the network nodes of the quantum network and is designed and configured to
- control at least one quantum memory, arranged in the respective same network node, for a temporary storage of entanglement states unambiguously designated by means of an identifier and their use for passing on respective entanglement relationships existing through them in the quantum network;
- evaluate Bell state measurements, which are carried out in the network node comprising them for a passing on of entanglement relationships taking place by entanglement swapping, which exist between this network node and respectively at least two other network nodes, and to forward the respective result of a measurement to at least two network nodes previously not in an entanglement relationship with one another according to the network path determined for this purpose via classical channels of the quantum network and thereby swap the entanglement relationship to these at least two network nodes, i.e., to pass on the entanglement relationship within the quantum network.

2. Method according to claim 1, wherein entanglement relationships existing in the quantum network are mediated by photon pairs of different wavelengths and thus frequencies, **characterized in that** in a respective network node with respect to two quantum mechanical objects located in different entanglement states mediated with different frequencies, prior to a Bell state measurement or prior to a storage of the entanglement states mediated by these quantum mechanical objects in quantum memories of different storage frequencies, a frequency conversion is carried out in which, while maintaining existing entanglement states, the frequency of one of the two quantum mechanical objects is converted into that of the respective other quantum mechanical object or the frequency of both quantum mechanical objects is converted into another frequency common to both quantum mechanical objects.

3. Method according to claim 1 or 2, **characterized in that** the shortest network path based on the weighting carried out is determined by the application of the Dijkstra algorithm weighted with the fidelity to the graph of the quantum network.

4. Method according to one of claims 1 to 3, **characterized in that** the fidelity for the weighting taking place within the framework of the shortest path algorithm is determined on the basis of measurements taken for this purpose in the network nodes forming the endpoints of a respective network path.

5. Method according to one of claims 1 to 4, **characterized in that** when determining a respective network path for passing on existing entanglement relationships, a basic weighting is additionally carried out by means of weighting information stored for this purpose in the network nodes at the ends of the individual path sections.

6. System for routing entanglement relationships existing between network nodes based on photonically mediated quantum mechanical entanglement states, namely a network configured for this purpose having a higher-level network management and having a plurality of network nodes connected to the quantum network by optical quantum channels each having an assigned classical channel, each of which is in an entanglement relationship with at least one other network node of the quantum network, **characterized in that** the network is formed by the aforementioned quantum network and a separate control network supplementing the latter, and **in that** the higher-level network management comprises network devices which are configured to execute a weighted shortest path algorithm for the purpose of pathfinding for routing to pass on an entanglement relationship existing between network nodes, by means of which a network path is determined which, weighted with an overall fidelity given for it upon its use, represents the shortest among the network paths coming into consideration for passing on the respective entanglement relationship, wherein each network node of the quantum network is equipped with a classical computer device and these classical computer devices connected to one another to form the separate control network are each configured and arranged to execute a routing protocol created by the higher-level network management for the routing of a respective entanglement relationship along the network path determined for this purpose, by
- controlling at least one quantum memory arranged in the respective same network node for the temporary storage of entanglement states in association with an identifier unambiguously designating them in each case and for the use of entanglement states stored therein, as well as a unit comprised by the same network node for carrying out Bell state measurements;
- evaluating Bell state measurements carried out in the network node respectively comprising them and forwarding the result of a respective measurement according to the calculated route to at least two network nodes previously not in an entanglement relationship with one another.

7. System according to claim 6, **characterized in that** each network node comprises a frequency converter which is configured to change the frequency of photons located in entanglement states while maintaining the respective entanglement states.

8. System according to claim 7, **characterized in that** each network node of the quantum network comprises a plurality of quantum memories configured for storing quantum mechanical entanglement states mediated by photons and an NxN Arrayed Waveguide Grating (AWG), and **in that** the individual quantum memories of a respective network node differ with regard to the wavelength with which entanglement states can be mediated to them by photons, wherein the input and output ports of the NxN AWG of a respective network node are interconnected for the wavelength-correct addressing of the quantum memories.

9. System according to one of claims 6 to 8, **characterized in that** within a quantum link existing between two network nodes via a quantum channel connecting them, at least one photon source is arranged which is configured to generate photons which are entangled in pairs with respect to a quantum state, and to emit to each of the network nodes connected to one another via the quantum channel respectively one photon of a respective pair of photons entangled with one another with respect to a quantum state, by the reception of which an entanglement relationship is created between the network nodes receiving them, wherein the at least one photon source can also be arranged within one of the network nodes of the quantum link.

10. System according to one of claims 6 to 9, **characterized in that** at least one quantum memory of a network node is formed by a configurable delay line.

11. System according to one of claims 6 to 9, **characterized in that** at least one quantum memory of a network node is formed by an atom trap.

12. System according to one of claims 6 to 9, **characterized in that** at least one quantum memory of a network node is formed by a diamond dot.

13. System according to one of claims 6 to 9, **characterized in that** at least one quantum memory of a network node is formed by a quantum dot.

14. System according to one of claims 6 to 9, **characterized in that** the at least one quantum memory of a network node is formed by a Pauli trap.

## Revendications

1. Procédé de routage de relations d'intrication existant du fait d'états d'intrication quantique à médiation photonique entre des nœuds de réseau dans un réseau quantique, c'est-à-dire pour une transmission incluant la recherche de chemins à travers le réseau quantique de ces relations d'intrication entre plusieurs nœuds de réseau reliés pour former le réseau quantique par des canaux quantiques optiques associés chacun à un canal classique, dont chacun se trouve dans une relation d'intrication avec au moins un autre nœud de réseau du réseau quantique, **caractérisé en ce que** la recherche de chemins de routage pour la transmission d'une relation d'intrication existant entre des nœuds de réseau à des nœuds de réseau qui ne se trouvaient pas jusque-là dans une relation d'intrication s'effectue selon un algorithme de plus court chemin pondéré, par le fait que des installations de réseau d'une structure supérieure de gestion du réseau déterminent dans le réseau quantique, au moyen d'un graphe qui y est constitué dont les nœuds sont associés aux nœuds de réseau et les bords à des canaux quantiques du réseau quantique reliant directement entre eux deux de ces nœuds de réseau et formant des sections possibles d'un chemin de réseau, un chemin de réseau qui est pondéré avec la fidélité donnée globalement pour lui lors de son utilisation, le plus court parmi les chemins de réseau envisageables pour transmettre la relation d'intrication en question, et **en ce qu'**un protocole de routage créé par les installations de la structure supérieure de gestion de réseau pour le routage d'une relation d'intrication correspondante sur le chemin de réseau déterminé pour cela est exécuté par des installations informatiques classiques coopérant entre elles dans un réseau de commande séparé, dont au moins une, respectivement, est disposée dans chacun des nœuds de réseau du réseau quantique et est conçue et configurée pour
- commander au moins une mémoire quantique disposée dans le même nœud de réseau respectif en vue d'un stockage temporaire d'états d'intrication désignés sans équivoque au moyen d'un identifiant et de leur utilisation pour la transmission de relations d'intrication respectives qu'ils ont créées dans le réseau quantique ;
- interpréter des mesures des états de Bell qui sont exécutées dans les nœuds de réseau qui les incluent pour une transmission de relations d'intrications par permutation d'intrication qui se créent entre ces nœuds de réseau et au moins deux autres nœuds de réseau respectivement et acheminer le résultat correspondant d'une mesure vers au moins deux nœuds de réseau qui ne se trouvaient pas jusque-là dans une relation d'intrication l'un avec l'autre et permuter ainsi la relation d'intrication sur ces au moins deux nœuds de réseau, c'est-à-dire transmettre la relation d'intrication à l'intérieur du réseau quantique.

2. Procédé selon la revendication 1, dans lequel des relations d'intrication existant dans le réseau quantique sont transmises par des paires de photons de longueur d'onde, donc de fréquence, différente, **caractérisé en ce qu'**est réalisée dans un nœud de réseau respectif, pour deux objets quantiques se trouvant dans des états d'intrication différents transmis à une fréquence différente, avant une mesure des états de Bell ou avant une entrée des états d'intrication transmis par ces objets quantiques dans des mémoires quantiques de fréquence de stockage différente, une conversion de fréquence à laquelle, tout en conservant les états d'intrication existants, la fréquence de l'un des deux objets quantiques existants est changée en celle de l'autre objet quantique respectif ou la fréquence des deux objets quantiques en une autre fréquence commune aux deux objets quantiques.

3. Procédé selon la revendication 1 ou 2, **caractérisé en ce que** le chemin de réseau le plus court sur la base de la pondération effectuée est déterminé par l'application pondérée par la fidélité de l'algorithme de Dijkstra aux graphes du réseau quantique.

4. Procédé selon l'une des revendications 1 à 3, **caractérisé en ce que** la fidélité pour la pondération réalisée dans le cadre de l'algorithme de plus court chemin est déterminée à l'aide de mesures effectuées pour cela dans les nœuds de réseau formant les points terminaux d'un chemin de réseau correspondant.

5. Procédé selon l'une des revendications 1 à 4, **caractérisé en ce que**, lors de la détermination d'un chemin de réseau correspondant pour la transmission de relations d'intrication existantes, une pondération de base par des informations de pondération enregistrées pour cela dans les nœuds de réseau aux extrémités des différentes sections de chemin est réalisée.

6. Système pour le routage de relations d'intrication existant du fait d'états d'intrication quantique à médiation photonique entre des nœuds de réseau, c'est-à-dire réseau conçu à cette fin avec une structure supérieure de gestion de réseau et avec plusieurs nœuds de réseau reliés pour former le réseau quantique par des canaux quantiques optiques associés chacun à un canal classique, dont chacun se trouve dans une relation d'intrication avec au moins un autre nœud de réseau du réseau quantique, **caractérisé en ce que** le réseau est formé par ledit réseau quantique et un réseau de commande séparé complémentaire de celui-ci et **en ce que** la structure supérieure de gestion du réseau comprend des installations de réseau conçues pour exécuter, en vue de la recherche de chemins pour le routage servant à la transmission d'une relation d'intrication existant entre des nœuds de réseau, un algorithme de plus court chemin pondéré au moyen duquel est déterminé un chemin de réseau qui, pondéré avec la fidélité donnée globalement pour lui lors de son utilisation, représente le plus court parmi les chemins de réseau envisageables pour transmettre la relation d'intrication en question, chaque nœud de réseau du réseau classique étant équipé d'une installation informatique classique et ces installations informatiques classiques, reliées entre elles pour former le réseau de commande séparé, étant chacune conçue et configurée pour exécuter un protocole de routage créé par la structure supérieure de gestion de réseau pour le routage d'une relation d'intrication correspondante sur le chemin de réseau déterminé pour cela
- en commandant au moins une mémoire quantique disposée dans le même nœud de réseau respectif pour le stockage temporaire d'états d'intrication assignés à un identifiant qui les identifie chacun sans équivoque et en utilisant des états d'intrication qui y sont stockés, ainsi qu'une unité incluse dans le même nœud de réseau pour l'exécution de mesures des états de Bell ;
- en interprétant des mesures des états de Bell exécutées dans les nœuds de réseau qui les incluent et en acheminant le résultat d'une mesure correspondante à au moins deux nœuds de réseau qui ne se trouvaient pas jusque-là dans une relation d'intrication l'un avec l'autre suivant le chemin de routage désigné.

7. Système selon la revendication 6, **caractérisé en ce que** chaque nœud de réseau comprend un convertisseur de fréquence qui est conçu pour modifier la fréquence de photons se trouvant dans des états d'intrication, en conservant les états d'intrication en question.

8. Système selon la revendication 7, **caractérisé en ce que** chaque nœud de réseau du réseau quantique comprend plusieurs mémoires quantiques conçues pour stocker des états d'intrication quantiques médiés par des photons et un réseau sélectif planaire (AWG) N x N et **en ce que** les différentes mémoires quantiques d'un nœud de réseau considéré diffèrent par la longueur d'onde à laquelle des états d'intrication peuvent leur être transmis par des photons, les ports d'entrée et de sortie du réseau sélectif planaire (AWG) N x N d'un nœud de réseau considéré étant connectés en vue de l'adressage des mémoires quantiques à la longueur d'onde correcte.

9. Système selon l'une des revendications 6 à 8, **caractérisé en ce qu'**est disposée, à l'intérieur de chaque liaison quantique créée entre deux nœuds de réseau par un canal quantique qui les relie, une source de photons qui est conçue pour produire des photons intriqués par paires en ce qui concerne un état quantique, et pour envoyer à chacun des nœuds de réseau reliés entre eux par le canal quantique un photon d'une paire de protons intriqués l'un avec l'autre en ce qui concerne un état quantique, dont la réception crée une relation d'intrication entre les nœuds de réseau qui les reçoivent, l'au moins une source de photons pouvant aussi être disposée à l'intérieur de l'un des nœuds de réseau de la liaison quantique.

10. Système selon l'une des revendications 6 à 9, **caractérisé en ce qu'**au moins une mémoire quantique d'un nœud de réseau est formée par un trajet de décélération configurable.

11. Système selon l'une des revendications 6 à 9, **caractérisé en ce qu'**au moins une mémoire quantique d'un nœud de réseau est formée par un piège à atomes.

12. Système selon l'une des revendications 6 à 9, **caractérisé en ce qu'**au moins une mémoire quantique d'un nœud de réseau est formée par un point de diamant.

13. Système selon l'une des revendications 6 à 9, **caractérisé en ce qu'**au moins une mémoire quantique d'un nœud de réseau est formée par un point quantique.

14. Système selon l'une des revendications 6 à 9, **caractérisé en ce que** l'au moins une mémoire quantique d'un nœud de réseau est formée par un piège de Pauli.
